# EUROPEAN PATENT APPLICATION

(11) **EP 0 944 146 A2**
(43) Date of publication of application: **22.09.1999**
(21) Application number: 99301967.8
(22) Date of filing: 15.03.1999
(51) Int. Cl.: H02B 1/26

(54) **Casing construction**

(30) Priority: 16.03.1998 GB 9805582
(71) Applicant: SRS Products PLC, Harlow, Essex CM20 2SE (GB)
(72) Inventor: Raymond, Hugh Anthony, Alton, Hampshire GU34 1NP (GB); Steel, Kenneth John, Oxford, Oxfordshire OX3 8ND (GB)
(74) Representative: Eder, Ephry

(57) **Abstract**

A casing construction for housing electrical apparatus, the casing being of generally parallelepiped form having framing elements along its twelve edges and having cover plates of the parallelpiped provided by a plurality of generally planar rectangular members each extending between two pairs of said framing elements. The framing elements are provided as hollow profiles of generally uniform cross-section that are interconnected at each corner of the parallelepiped by a tri-spigot connector.

At least one of the tri-spigot connectors provides or retains a rigid electrical inter-connection element.

At each corner there is provided a unitary seal structure.

## Description

### Technical Field

This invention relates to the construction of casings, particularly, but not exclusively, to the construction of casings to be used for the housing of electrical apparatus.

### Background Art

A known type of casing is of generally parallelepiped form having framing elements along its twelve edges and having cover plates of the parallelpiped provided by a plurality of generally planar rectangular members each extending between two pairs of said framing elements. In this known type of casing, the number of planar members may be less than six to provide one or more open sides for the parallelpiped casing. Thus, for example, said planar members may be provided for the top, the bottom, the left side and the right side of the casing, and the front and/or the rear may be left open - possibly for closure by a removable panel that is fitted subsequently.

One known kind of casing of the said type (hereinafter called "of the said known kind") provides the framing elements as hollow profiles of generally uniform cross-section that are interconnected at each corner of the parallelepiped by a connector having a core piece or part from which three mutually perpendicular spigots extend (hereinafter called a "tri-spigot connector"). The three spigots being for fitting accommodation in the hollow interiors of the three mutually perpendicular framing elements that adjoin that corner.

Where casings of this said known kind are to be used for the housing of electrical apparatus, one or more safety requirements may be imposed. These include:
- earth bonding to an appropriate standard (e.g. LVD Earthing, Class 1) to ensure that metal planar members are electrically connected to one another (and to the framing elements if these too are of metal),
- dust and moisture ingress (or egress) prevention to an appropriate standard (a so-called IP rating), and
- electro-magnetic coupling (or EMC) to shield and/or resist the transmittance of electro-magnetic radiation, e.g. RF signals, through the casing.

It has been difficult and/or expensive in the past to meet some, especially all, of these requirements with casings of the said known kind. For example, to achieve satisfactory earth bonding it has been necessary to interconnect the several metal planar members and/or the several framing elements (if of metal) by means of several individual flexible wires or cables.

The present invention is concerned with providing a casing construction of the said known kind which, when it is to be used for the housing of electrical apparatus, can overcome or at least reduce one or more of the above-mentioned and/or other difficulties or problems associated with prior art constructions.

Summary of the Invention: According to this invention there is provided a casing construction of the said known kind characterised by one or more of the following:
(a) each of the hollow profiles is internally provided with a through-going formation into an end of which a metal threaded fastener may be screwed, and at each corner of the parallelepiped casing the tri-spigot connector - with its spigots inserted into the hollow interiors of the framing elements adjoining that corner - is fastened to those three framing elements by three such threaded fasteners extending longitudinally of the through-going formations;
(b) at least one of the tri-spigot connectors provides or retains a rigid electrical inter-connection element to which at least one of the neighbouring planar members is positively attached, e.g. by a metal fastener, such as to be both physically and electrically connected thereto;
(c) at each corner there is provided a unitary seal structure comprising three mutually perpendicular limbs to extend along the three arrisses that are each formed by the mutually neighbouring edges of a pair of adjoining framing elements, at least one of said limbs of the seal structure terminating at its free end with a tab or pad to engage surfacially and sealingly against a corner portion of an adjacent generally planar member.

Preferably the hollow profiles are provided with an externally facing channel to receive the marginal edge portion of a said planar member.

Preferably, where feature (a) is provided, one or more of the through-going formations is of generally C-shaped cross-section.

Preferably where feature (b) is provided, two such tri-spigot connectors are located at two diametrically opposite corners of the parallelepiped casing and each provide or retain a rigid electrical interconnection element to which at least two of the adjoining planar members are positively attached, e.g. by metal fasteners, such as to be both physically and electrically interconnected by said rigid electrical interconnection element.

Advantageously, the profiles are of metal, e.g. aluminium extrusions.

Although the tri-spigot connectors may be formed as metal castings, (whereby, where feature (b) is provided, the tri-spigot connector provides said rigid inter-connection element), such a metal casting requires subsequent machining and, in general, a possible tendency to sudden fracture under load. Accordingly it is preferred that the tri-spigot connectors comprise mouldings of plastics material (whereby, where feature (b) is provided, the tri-spigot connector retains said rigid interconnection element)

In one preferred embodiment, both features (a) and (b) are provided, the profiles are of metal, the tri-spigot connectors are of electrically insulating plastics material, and at least one of the metal threaded fasteners that are engaged with the through-going formations of the metal profiles is also engaged with the said rigid electric interconnection element whereby the latter, at each corner, provides electrical interconnection between the adjoining planar member(s) and the three mutually perpendicular framing elements.

Preferably, where feature (c) is provided, each of two of said mutually perpendicular limbs terminates at its free end with a tab or pad, the two tabs or pads extending in two mutually perpendicular planes and such as to engage surfacially and sealingly against neighbouring corner portions of two mutually perpendicular ones of said generally planar members. be described with reference to the accompanying drawings of which:

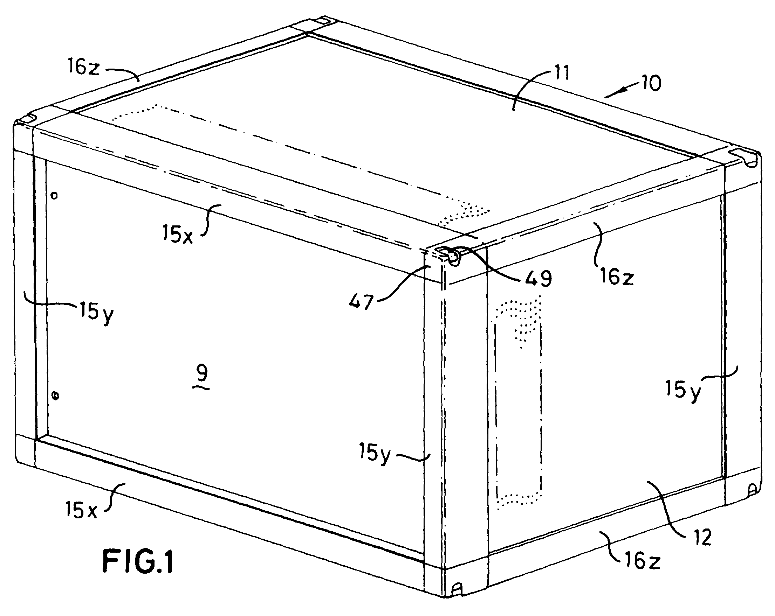

- Figure 1: is a schematic perspective view of a casing construction according to the present invention,
- Figure 2: is an enlarged perspective view of the front, top, right-hand corner of the casing of Fig 1,
- Figure 3: is an enlarged perspective view of the same corner of Fig 2 with a cover part removed,
- Figure 4: is a similar view to that of Fig 3 with all parts removed save for the framing elements,
- Figures 5A and 5B: are end views of two of the framing elements shown in Fig 4,
- Figure 6: is a perspective view of a tri-spigot for interconnecting the framing elements shown in Figure 4,
- Figure 7: is a perspective view of a metal bracket for interconnecting two of casing's cover plates or panel,
- Figure 8: is a perspective view of a seal structure for use in the corner of Figs 2-4,6 and 7,

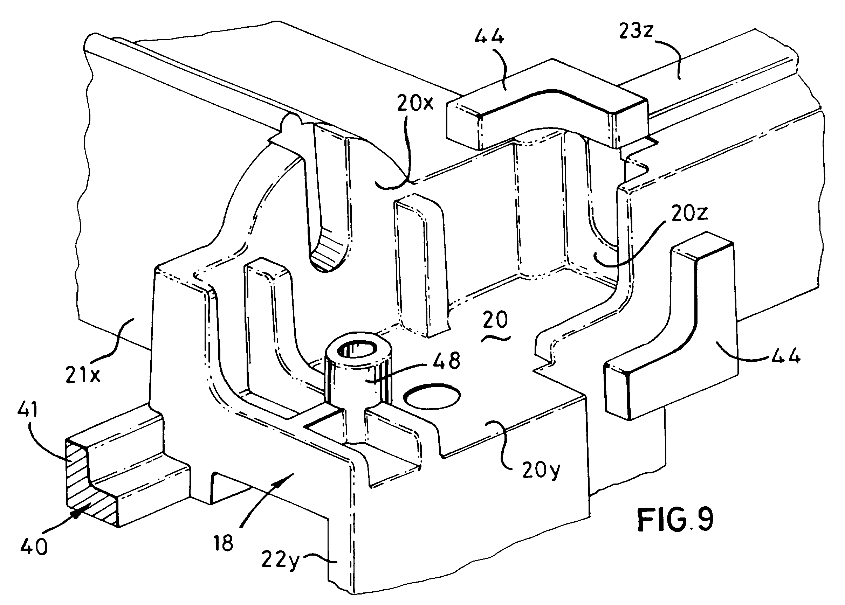

- Figure 9: is a perspective view showing the seal structure of Fig 8 in association with the tri-spigot of Figure 6, and
- Figure 10: is a perspective view of the parts of Fig 9 in association with two adjoining corner plates or panels.

### Detailed Description of Example(s) of the Invention

The illustrated casing 10 is of generally parallelepiped form and of the known type having twelve framing elements along its edges with a plurality of generally planar and rectangular members extending, each between two pairs of framing elements, to form cover plates of the parallelepiped. (In this illustrated form of the type of casing, only four planar members 11-14 are provided as cover plates or panels for the top, bottom and two sides of the parallelepiped casing, the front and rear of the casing being left open to permit fitting into the casing of, e.g. electrical apparatus and subsequent closure of these openings by a separate front panel 9 and a rear panel (not explained below).

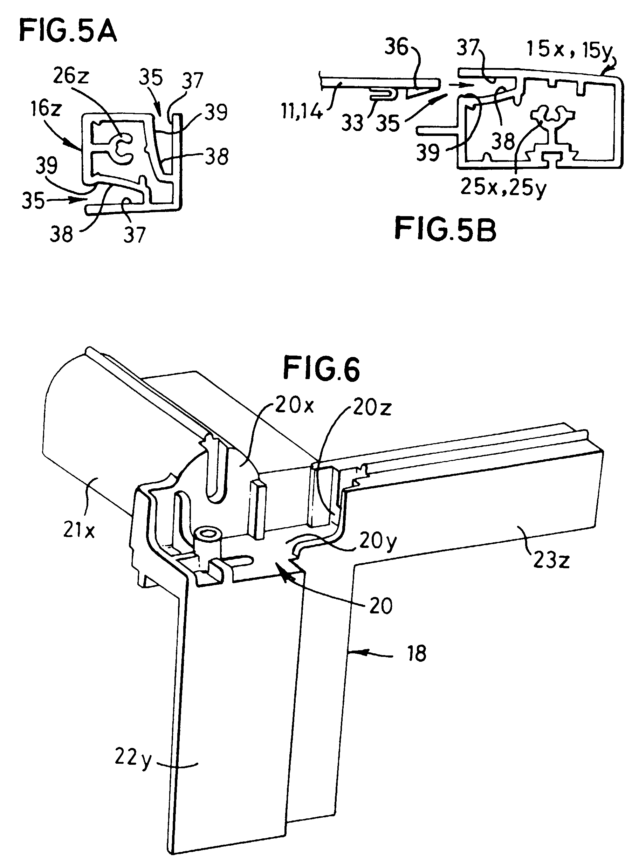

The illustrated casing 10 is of the known kind in which the framing elements are extruded aluminium profiles of generally uniform hollow cross-section. Two forms of profile are provided. One profile form - referenced in the drawings as 15x,15y - is provided around the perimeter of the open front and rear of the casing. The other profile form - referenced 16z in the drawings - is provided at the opposite side edges of the top panel 11 and of the bottom panel of the parallelpiped to alternate with two framing elements 15x around that panel's perimeter. Thus the casing has eight framing elements 15,15y and four framing elements 16z. At each corner of the parallelpiped casing, three elements 15x, 15y and 16x come together and are there connected to one another by a tri-spigot connector 18 (Fig 6). The latter has a core piece or part 20 having three mutually perpendicular flat surfaces 20x, 20y and 20z provided with apertures therethrough. Spigots 21x, 22y and 23z extend orthogonally in directions normal to these flat surfaces 20x, 20y and 20z. These orthoganally directed spigots 21x, 22y and 23z are for fitting accommodation in the hollow interiors of, respectively, the three framing elements 15x, 15y and 16z that adjoin that corner. In this illustrated embodiment the eight tri-spigot connectors 18 that are provided are each formed as a moulding of a suitable plastics material.

Each of the hollow profiles 15x,15y and 16z is provided integrally provided with a through-going formation 25x,25y and 26z of generally C-shaped cross-section. When the three profiles meet at each corner of the parallelepiped casing, they and the associated tri-spigot connector 18 can be interconnected with one another by inserting the connector's spigots 21x, 22y and 23z into the hollow interiors of the respective framing elements 15x, 15y and 16z adjoining that corner, and then fastening the connector 18 to those three framing elements by screwing three metal threaded fasteners, e.g. screws, into the ends of the formations 25,25y and 26z in a direction extending longitudinally of these through-going formations.

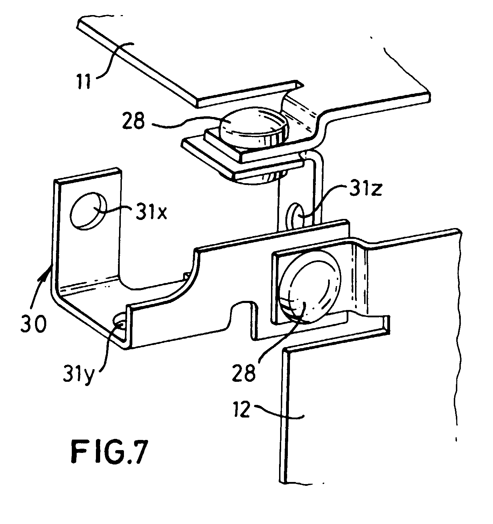

The tri-spigot connectors 18 at two diametrically opposite corners of the parallelepiped casing - in this illustrated embodiment at the top left front of the casing and at the bottom right rear of the casing - each retain a rigid electrical interconnection element 30 (Fig 7) to which two of the adjoining planar members 11-14 (11 and 12) are positively attached.

Element 30 is a shaped and apertured metal bracket provided with three holes 31x, 31y and 31z and with two further holes 32,33. Each of holes 31x, 31y and 31z is to be engaged by an associated one of the three metal spigot-to-framing element fasteners. The two further holes 32,33 receive therethrough two further screws 28 or other metal fasteners, whereby the two adjoining planar members 11 and 12 are both physically and electrically interconnected by said rigid electrical interconnection element 30 (and are also electrically connected to the three mutually perpendicular framing elements 15x,15y and 16x at that corner).

Excellent earth bonding is thus provided between all twelve of the framing elements and the four cover plates 11-14.

Each of the twelve hollow profiles 15x,15y and 16z is provided with an externally facing channel 35 to receive the marginal edge portion of a planar cover plate member 11-14 (see Figs 5A and 5B). Each cover plate 11-14 is provided on its underneath face, around its perimeter, with a substantially continuous strip 36 of resilient material to provide a liquid-resistant sealing "ring" between each plate and the four framing elements bounding that plate. As shown in Fig 5B this sealing strip has a tapered or frusto-triangular cross-section.

It will be seen that the channel 35 in each framing element profile comprises an outer wall and an inner wall. The outer wall defines for the channel, an internal surface 37 that is planar so as to abut sufacially against the outer face of the cover plate received by that channel. The inner wall is composed of two surface portions. The surface portion 38 that is most inward of the channel is inclined such as to progressively widen the channel as it extends to the channel's mouth. This allows this channel's surface portion 38 surfacially to abut the correspondingly inclined face of the sealing strip 36. The provision of such mutually engaging inclined sealing surfaces permits of progressively tighter sealing engagement as the cover plate and framing element are urged towards one another (in the direction of the arrow shown in Fig 5B).

The other surface portion 39 (that is most outward of the channel) is planar and substantially parallel to the planar internal surface 37 of the outer channel wall. A space is thus provided between this inner wall's planar surface and the underneath metal surface of the cover plate received by the channel. A plurality of metal clips 33 of U-shaped cross-section (having slots cut at longitudinal intervals into one of the limbs are inserted, at intervals, into the said space between 37 and 39 so as to provide a suitable level of EMC shielding.

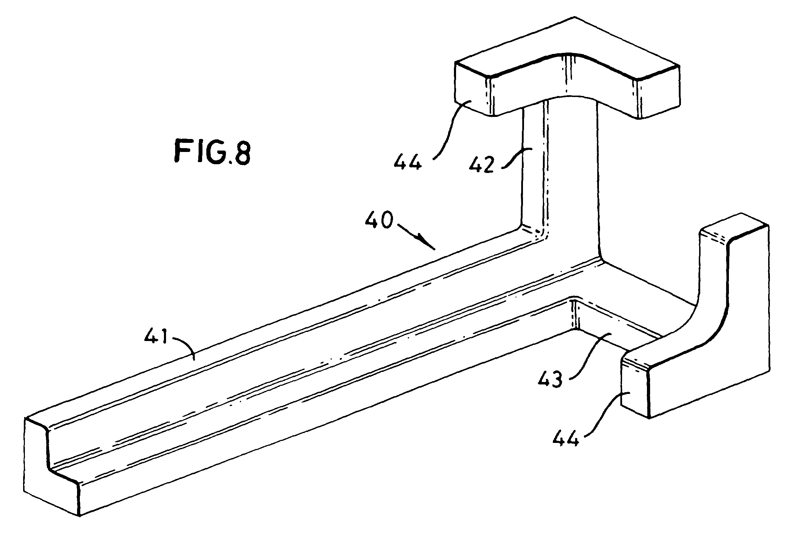

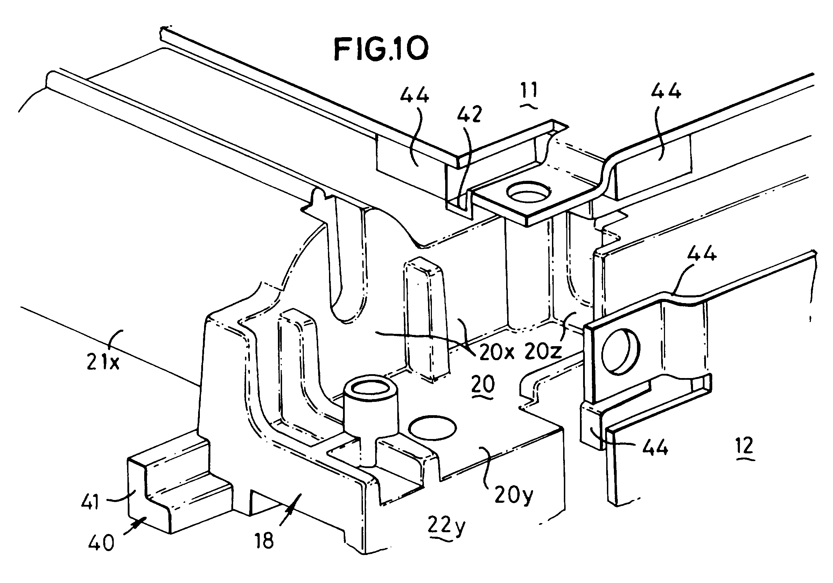

In addition, at each corner of the casing there is provided a unitary seal structure 40 (Fig 8) comprising three mutually perpendicular limbs 41-43 each of L-shaped cross-section. These limbs 41-43 extend along the three inwardly facing arrisses formed by the edges of the three adjoining framing elements 15x,15y and 16z and engage three edges of the core piece 20 of tri-spigot 18 (see Fig 10).

Each of the two limbs 41 and 42 terminates at its free end with a tab or pad 44 of generally triangular or L-shape. The two tabs or pads 44 extend in two mutually perpendicular planes and engage surfacially and sealingly against the underneath sealing strips 36 of the neighbouring corner portions of the two mutually perpendicular ones of said generally planar cover plates 11-14. Excellent sealing and dust and moisture ingress (or egress) prevention is thus provided around at least the top of casing 10.

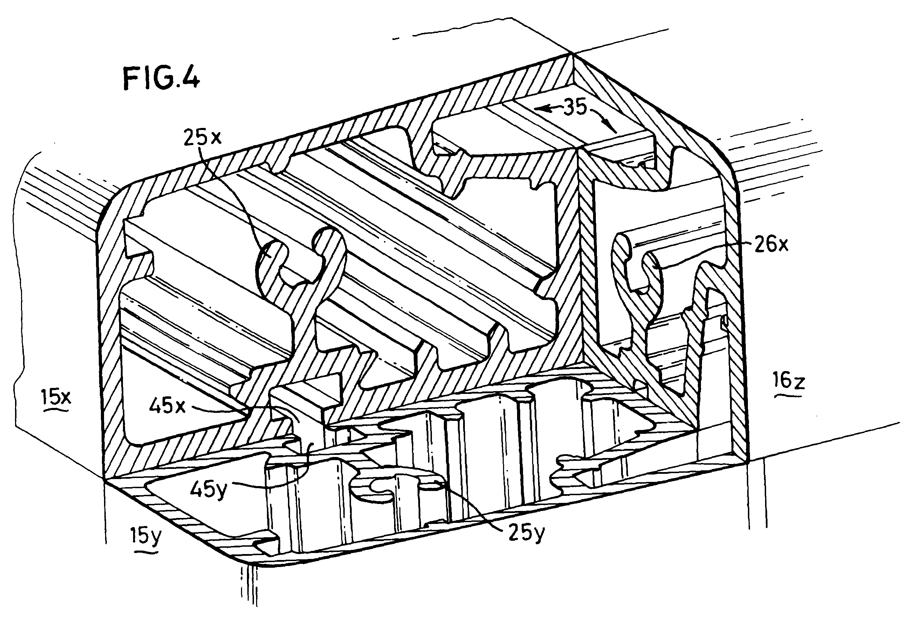

To provide for closure of the open front 9 and/or the open rear of the parallelpiped casing 10, the four framing elements 15x,15y around that opening are each provided with a T-section channel 45x,45y (Fig 4). The margin of a plate can be fitted (optionally with a sealing element) into the aligned mouths of the four aligned channels 45x,45y. This plate may cover the entirety of the opening or be only a selvedge plate having a rectangular opening over the majority of its area and to which some other desired closure member is secured (e.g. by threaded fasteners, pop rivets or the like).

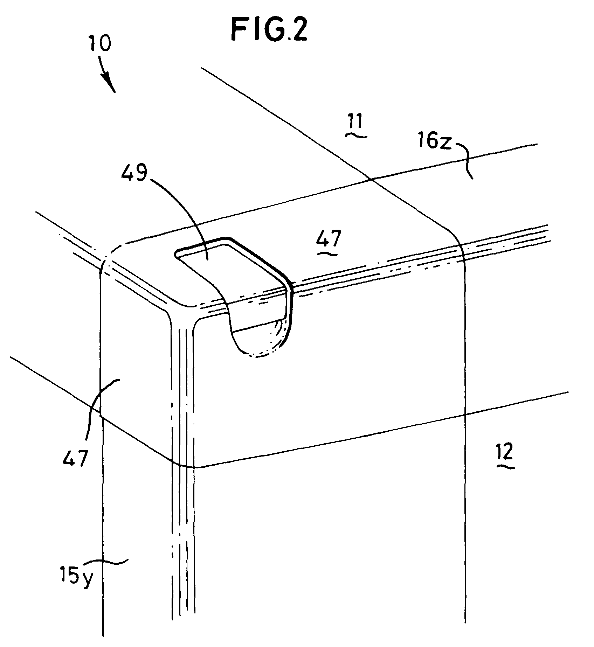

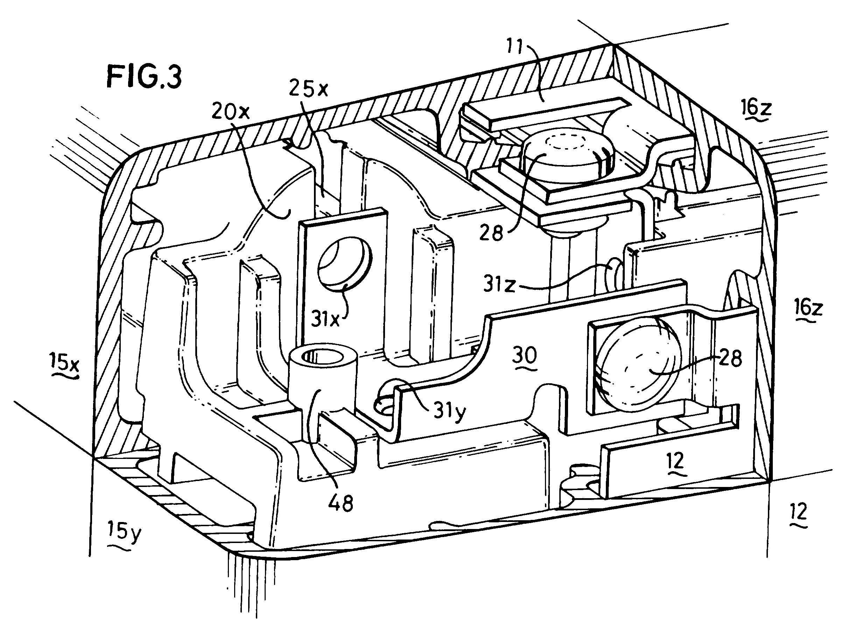

To conclude assembly, a plastics material corner cover 47 (Fig 2) is attached to the tri-spigot 18 by means of a screw or other threaded fastener screwed (through an apertured fastening recess in the cover 47 and into a pillar 48 (Fig 3) that is molded integrally with the tri-spigot 18. The cover 47 is somewhat resilient and its edges either fit closely to, or overlie marginally, the edges of the adjacent framing elements 11-14 such as to provide at those edges a measure of sealing against dust and moisture ingress (or egress). A tab 49 of similar plastics material is snap-fitted into engagement within the fastening recess in cover 47 to provide an attractive-looking finish.

It will be appreciated that forming the tri-spigots 18 as mouldings of plastics material renders them durable products that require no post-formation machining and that are resistant to brittle fracture. Nevertheless, it will be appreciated that the tri-spigots 18 could alternatively be formed as metal die-castings that are machined to the fine dimensions required. If formed in this way the metal brackets 30 (which are simple and inexpensive to produce) may be redundant since the metal die-casting itself could then provide electrical inter-connection between the framing elements and the cover plates 11-14.

Other modifications and embodiments of the invention, which will be readily apparent to those skilled in this art, are to be deemed within the ambit and scope of the invention, and the particular embodiment(s) hereinbefore described may be varied in construction and detail, e.g. interchanging (where appropriate or desired) different features of each, without departing from the scope of the patent monopoly hereby sought.

## Claims

1. A casing construction of the said known kind characterised by one or more of the following features:
(a) each of the hollow profiles is internally provided with a through-going formation into an end of which a metal threaded fastener may be screwed, and at each corner of the parallelepiped casing the tri-spigot connector - with its spigots inserted into the hollow interiors of the framing elements adjoining that corner - is fastened to those three framing elements by three such threaded fasteners extending longitudinally of the through-going formations;
(b) at least one of the tri-spigot connectors provides or retains a rigid electrical inter-connection element to which at least one of the neighbouring planar members is positively attached, e.g. by a metal fastener, such as to be both physically and electrically connected thereto;
(c) at each corner there is provided a unitary seal structure comprising three mutually perpendicular limbs to extend along the three arrisses that are each formed by the mutually neighbouring edges of a pair of adjoining framing elements, at least one of said limbs of the seal structure terminating at its free end with a tab or pad to engage surfacially and sealingly against a corner portion of an adjacent generally planar member.

2. A casing construction according to Claim 1 and wherein feature (a) is provided, characterised in that one or more of the through-going formations is of generally C-shaped cross-section.

3. A casing construction according to Claim 1 and wherein feature (b) is provided, characterised in that two such tri-spigot connectors are located at two diametrically opposite corners of the parallelepiped casing and each provide or retain a rigid electrical interconnection element to which at least two of the adjoining planar members are positively attached such as to be both physically and electrically interconnected by said rigid electrical interconnection element.

4. A casing construction according to Claim 3 wherein the positive attachment is by means of metal fasteners.

5. A casing construction according to Claim 1 and wherein feature (c) is provided, characterised in that each of two of said mutually perpendicular limbs terminates at its free end with a tab or pad, the two tabs or pads extending in two mutually perpendicular planes and such as to engage surfacially and sealingly against neighbouring corner portions of two mutually perpendicular ones of said generally planar members.

6. A casing construction according to any preceding Claim, wherein the hollow profiles are provided with an externally facing channel to receive the marginal edge portion of a said planar member.

7. A casing construction according to any preceding Claim, wherein the profiles are of metal, e.g. aluminium extrusions.

8. A casing construction according to any one of Claims 1 to 6, wherein the tri-spigot connectors are formed as metal castings.

9. A casing construction according to any preceding Claim, wherein the tri-spigot connectors comprise mouldings of plastics material.

10. A casing construction according to Claim 1 and wherein both features (a) and (b) are provided, characterised in that the profiles are of metal, the tri-spigot connectors are of electrically insulating plastics material, and at least one of the metal threaded fasteners that are engaged with the through-going formations of the metal profiles is also engaged with the said rigid electric interconnection element whereby the latter, at each corner, provides electrical interconnection between the adjoining planar member(s) and the three mutually perpendicular framing elements.
